# EUROPÄISCHE PATENTANMELDUNG

(11) **EP 4 512 660 A1**
(43) Veröffentlichungstag der Anmeldung: **26.02.2025**
(21) Anmeldenummer: 24195280.3
(22) Anmeldetag: 20.08.2024
(51) Int. Cl.: B60P 3/34, B60P 3/38, E04H 15/06, B60R 3/00, B60P 3/39

(54) **FREIZEITFAHRZEUG UND AUFSTELLDACH**

(30) Priorität: 25.08.2023 DE 102023122938
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Aufstelldach (2) für Freizeitfahrzeuge (1), insbesondere Wohnmobile und/oder Campervans und/oder auf Hochdachkombis basierenden Freizeitfahrzeugen, mit einem Rahmen (10) und zumindest einer Aufstiegsöffnung (11), die einen Aufstieg durch den Rahmen (10) ermöglicht. Vorgeschlagen wird, dass eine Bettkonstruktion (12) vorgesehen ist, dass die Bettkonstruktion (12) entlang einer Längsrichtung (13) zumindest mittelbar an dem Rahmen (10) geführt ist, dass die die Bettkonstruktion (12) entlang der Längsrichtung (13) über den Rahmen (10) hinaus in eine auskragende Endstellung (15) verschiebbar ist und dass die Bettkonstruktion (12) und der Rahmen (10) so ausgestaltet sind, dass in der auskragenden Endstellung (15) die Aufstiegsöffnung (11) in dem Rahmen (10) neben der Bettkonstruktion (12) freigegeben ist. Ferner ist ein Freizeitfahrzeug (1) mit solch einem Aufstelldach (2) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der EP 4 206 035 A1 ist eine mobile aufblasbare Behausung für ein Fahrzeugdach bekannt. Hierbei ist eine Durchstiegsöffnung im Fahrzeugdach ausgebildet.

Wenn das Freizeitfahrzeugs nur geringe Dachabmessungen hat, dann ist bei einem Dachaufstieg eine Matratzenunterlage oder dergleichen im Weg. Denkbar ist es, dass die Matratzenunterlage weggeklappt wird, um den Aufstieg zu ermöglichen.

Aufgabe der Erfindung ist es, eine Aufstelldach für ein Freizeitfahrzeug und ein Freizeitfahrzeug anzugeben, die verbessert ausgestaltet sind. Insbesondere ist es eine Aufgabe der Erfindung ein Aufstelldach für ein Freizeitfahrzeug und ein Freizeitfahrzeug anzugeben, bei denen bei einem besonders begrenzten Innenraum des Freizeitfahrzeugs eine relativ große Ablagefläche realisierbar ist und zugleich ein Stauraum für den Transport sperriger Güter ermöglicht wird.

Die Aufgabe wird durch eine Aufstelldach mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch ein Aufstelldach für Freizeitfahrzeuge, insbesondere Wohnmobile und/oder Campervans und/oder auf Hochdachkombis basierenden Freizeitfahrzeugen, mit einem Rahmen und zumindest einer Aufstiegsöffnung, die einen Aufstieg durch den Rahmen ermöglicht, gelöst, wobei eine Bettkonstruktion vorgesehen ist, wobei die Bettkonstruktion entlang einer Längsrichtung zumindest mittelbar an dem Rahmen geführt ist, wobei die die Bettkonstruktion entlang der Längsrichtung über den Rahmen hinaus in eine auskragende Endstellung verschiebbar ist und wobei die Bettkonstruktion und der Rahmen so ausgestaltet sind, dass in der auskragenden Endstellung die Aufstiegsöffnung in dem Rahmen neben der Bettkonstruktion freigegeben ist.

Ferner wird die Aufgabe durch ein Freizeitfahrzeug, insbesondere ein Wohnmobil und/oder einen Campervan und/oder ein auf einem Hochdachkombi basierendes Freizeitfahrzeug, mit einem solchen Aufstelldach gelöst.

Vorteilhaft ist es, dass eine Dachschale vorgesehen ist und dass die Bettkonstruktion bei geschlossener Dachschale in einer Normalstellung an dem Rahmen angeordnet ist, in der die Bettkonstruktion zumindest nicht wesentlich über den Rahmen hinaus in Richtung der auskragenden Endstellung geschoben ist. Somit ist eine kompakte Ausgestaltung des Aufstelldachs im geschlossenen Zustand möglich, die eine Montage auch bei vergleichsweise kurzer Dachlänge ermöglicht. Trotz der kurzen Dachlänge kann dann ein Dachaufstieg realisiert werden.

Vorteilhaft ist es, dass dass die Bettkonstruktion als rahmenförmige Bettkonstruktion ausgestaltet ist. Dadurch kann eine vorteilhafte Führung ermöglicht werden. Es kann eine leichte Bauweise erzielt werden.

Vorteilhaft ist es, dass zwischen der Bettkonstruktion und dem Rahmen eine Schienenführung ausgebildet ist. Dadurch ist eine robuste und in vorteilhafter Weise belastbare Ausgestaltung möglich. Ferner kann eine Funktionsweise auch bei Temperaturschwankungen und/oder bei unterschiedlicher Besonnung gewährleistet werden.

Vorteilhaft ist es, dass die Bettkonstruktion eine erste Längsstrebe und eine zweite Längsstrebe aufweist, dass an der ersten Längsstrebe eine erste Schiene vorgesehen ist, dass an der zweiten Längsstrebe eine zweite Schiene vorgesehen ist, dass der Rahmen eine erste Längsseite, die eine erste Führungsaufnahme aufweist, und eine zweite Längsseite aufweist, die eine zweite Führungsaufnahme aufweist, und dass die Bettkonstruktion in dem Rahmen geführt ist, indem die erste Schiene in die erste Führungsaufnahme und die zweite Schiene in die zweite Führungsaufnahme eingreift. Dadurch ist eine robuste und in vorteilhafter Weise belastbare Ausgestaltung möglich. Ferner kann eine Funktionsweise auch bei Temperaturschwankungen und/oder bei unterschiedlicher Besonnung gewährleistet werden.

Vorteilhaft ist es, dass die erste Schiene horizontal verläuft und sich vertikal durch die erste Führungsaufnahme erstreckt und dass die zweite Schiene horizontal verläuft und sich vertikal durch die zweite Führungsaufnahme erstreckt. Somit ist eine robuste Führung möglich. Dies kann auch mit einer weiteren Funktionalität, insbesondere einem Hochschwenken der Bettkonstruktion, kombiniert werden.

Vorteilhaft ist es, dass die Bettkonstruktion zumindest eine Knickstelle aufweist, wobei eine erste Hubstrebe der Bettkonstruktion und eine zweite Hubstrebe der Bettkonstruktion an der Knickstelle so abwinkelbar sind, dass ein Teil der Bettkonstruktion nach oben schwenkbar ist. Dadurch kann beispielsweise eine größere Kopffreiheit für in einem Innenraum des Freizeitfahrzeugs sitzende oder möglicherweise auch stehende Personen geschaffen werden.

Vorteilhaft ist es, dass der nach oben geschwenkte Teil der Bettkonstruktion zumindest einen Bereich um die Aufstiegsöffnung frei gibt. Dadurch kann ein Bereich im Freizeitfahrzeug, der für den Aufstieg dient, auch in vorteilhafter Weise zum Sitzen oder Stehen bei größerer Höhe im Innenraum genutzt werden.

Vorteilhaft ist es, dass der Teil der Bettkonstruktion zumindest dann nach oben schwenkbar ist, wenn die Bettkonstruktion in der auskragenden Endstellung angeordnet ist. Dadurch kann zusätzliche Kopffreiheit gewonnen werden, da die Knickstelle gewissermaßen von der sitzenden oder stehenden Person dann weiter entfernt ist.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einem Aufstelldach entsprechend einem Ausführungsbeispiel in einer auszugsweisen, schematischen, räumlichen Darstellung, wobei eine Ansicht von seitlich hinten bei geöffnetem Aufstelldach gezeigt ist und wobei zusätzliche Elemente, wie eine Bespannung des Aufstelldachs nicht dargestellt sind;

- Fig. 2: das in Fig. 1 gezeigte Freizeitfahrzeug, wobei eine Bettkonstruktion teilweise nach oben geschwenkt ist;
- Fig. 3: das in Fig. 1 gezeigte Freizeitfahrzeug, wobei ein Bettelement, insbesondere eine Bettauflage, mittels der Bettkonstruktion an einem Rahmen abgestützt ist;
- Fig. 4: das in Fig. 3 gezeigte Freizeitfahrzeug, wobei die Bettkonstruktion in eine auskragende Endstellung verstellt ist, so dass eine Aufstiegsöffnung freigegeben ist;
- Fig. 5: das in Fig 4 gezeigte Freizeitfahrzeug, wobei die Bettkonstruktion aus der auskragenden Endstellung teilweise nach oben geklappt ist;
- Fig. 6: das in Fig. 5 gezeigte Freizeitfahrzeug in einer auszugsweisen, schematischen Darstellung aus der mit V bezeichneten Blickrichtung; und
- Fig. 7: das Freizeitfahrzeug entsprechend dem Ausführungsbeispiel, wobei das Aufstelldach geschlossen ist.

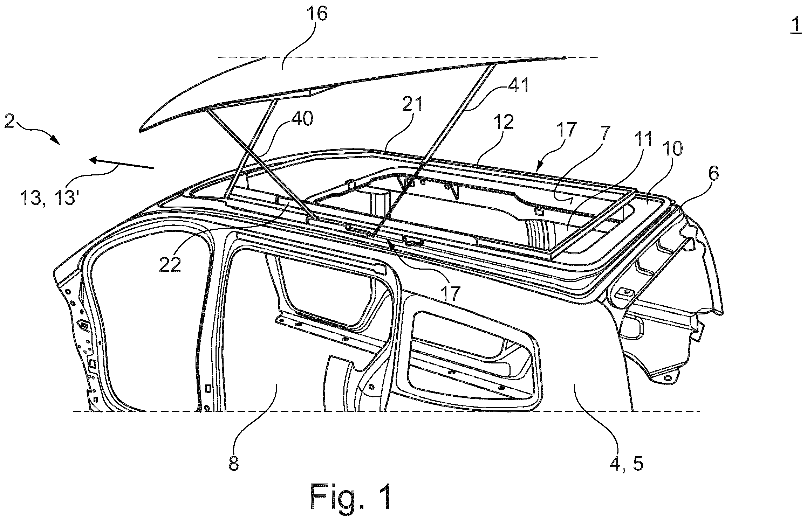

Fig. 1 zeigt ein Freizeitfahrzeug 1 mit einem Aufstelldach 2 entsprechend einem Ausführungsbeispiel in einer auszugsweisen, schematischen, räumlichen Darstellung, wobei eine Ansicht von seitlich hinten bei geöffnetem Aufstelldach 2 gezeigt ist und wobei zusätzliche Elemente, wie eine Bespannung des Aufstelldachs nicht dargestellt sind.

Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, ein Fahrwerk, die Sitze der ersten Reihe und die Rückbank oder Einzelsitze im Fond übernommen. Die Heckklappe ist vorzugsweise die Heckklappe des Basisfahrzeugs 4.

Es sind aber geeignete Modifikationen möglich. Beispielsweise ist an dem Dach 6 ein geeigneter Dachausschnitt 7 vorgesehen, um den Aufstieg in das Aufstelldach 2 und gegebenenfalls eine höhere Stehhöhe im Innenraum 8 des Freizeitfahrzeugs 1 zu ermöglichen.

Das Aufstelldach 2 weist einen Rahmen 10 und eine Aufstiegsöffnung 11 auf. Die Aufstiegsöffnung 11 liegt hierbei im Dachausschnitt 7. Die Aufstiegsöffnung 11 ermöglicht einer Person einen Aufstieg durch den Rahmen 10 in das geöffnete Aufstelldach 2.

Ferner weist das Aufstelldach 2 eine Bettkonstruktion 12 auf. Die Bettkonstruktion 12 ist entlang einer Längsrichtung 13 an dem Rahmen 10 geführt.

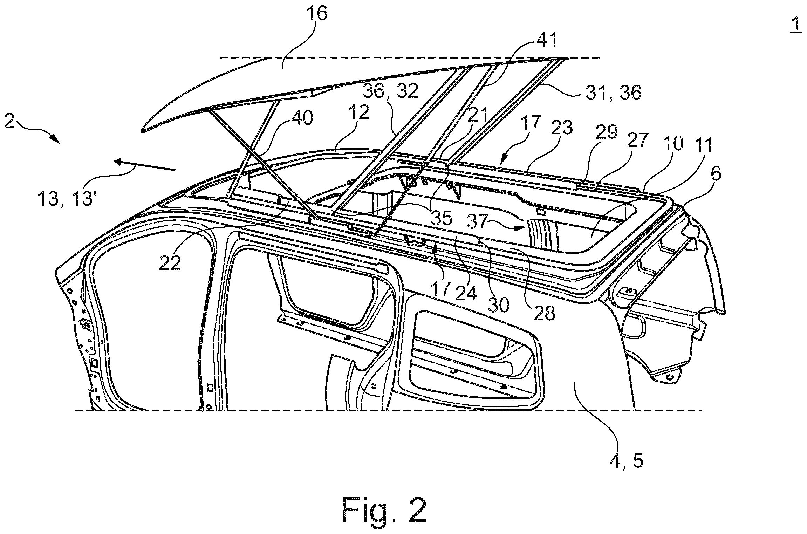

Das Freizeitfahrzeug 1 und das Aufstelldach 2 sind im folgenden auch unter Bezugnahme auf die Fig. 2 bis 7 weiter beschrieben.

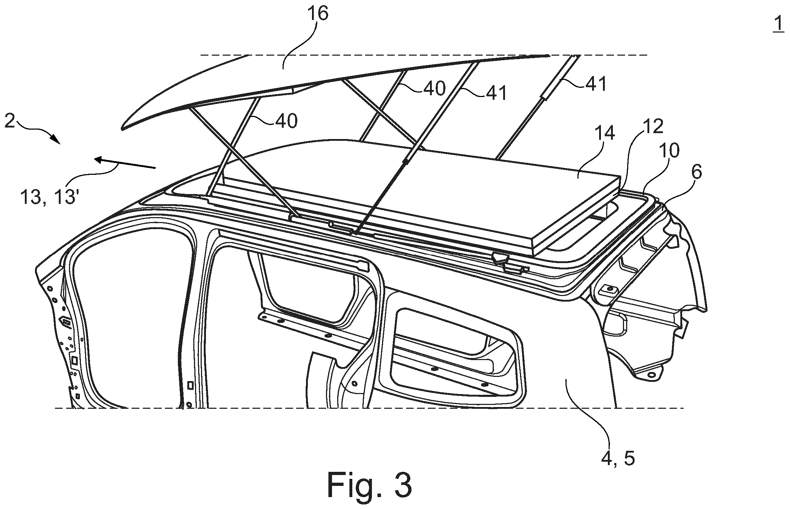

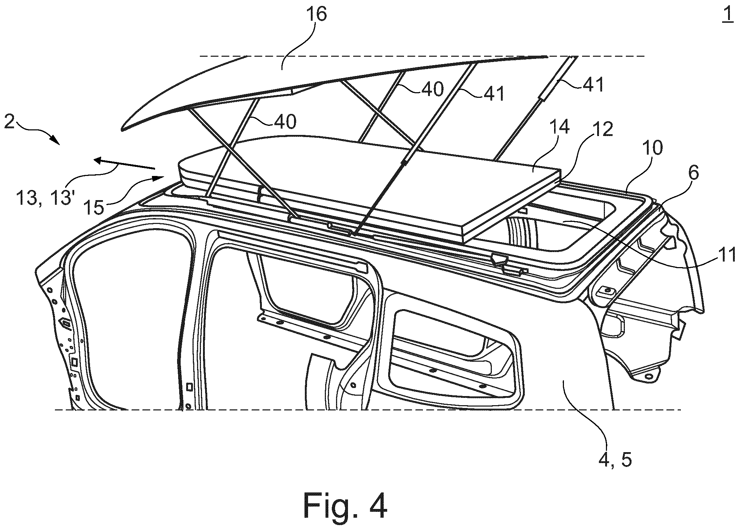

Fig. 2 zeigt das in Fig. 1 gezeigte Freizeitfahrzeug 1, wobei die Bettkonstruktion 12 teilweise nach oben geschwenkt ist. Ferner zeigt Fig. 3 das in Fig. 1 gezeigte Freizeitfahrzeug 1, wobei ein Bettelement 14, insbesondere eine Bettauflage 14, mittels der Bettkonstruktion an einem Rahmen 10 abgestützt ist. Außerdem zeigt Fig. 4 das in Fig. 3 gezeigte Freizeitfahrzeug 1, wobei die Bettkonstruktion 12 in eine auskragende Endstellung 15 verstellt ist, so dass die Aufstiegsöffnung 11 freigegeben ist.

Die Bettkonstruktion 12, die entlang der Längsrichtung 13 an dem Rahmen 10 geführt ist, kann in diesem Ausführungsbeispiel in der Längsrichtung 13, die in diesem Ausführungsbeispiel gleich der Fahrtrichtung 13' ist, sogar über den Rahmen 10 hinaus in die auskragende Endstellung 15 verschoben werden.

Die Bettkonstruktion 12 und der Rahmen 10 sind insbesondere bezüglich ihrer geometrischen Abmessungen so ausgestaltet, dass in der auskragenden Endstellung 15 die Aufstiegsöffnung 11 in dem Rahmen 10 neben der Bettkonstruktion 12 freigegeben ist. Die Aufstiegsöffnung 11 ergibt sich somit durch den Rahmen 10 hindurch und neben der Bettkonstruktion 12.

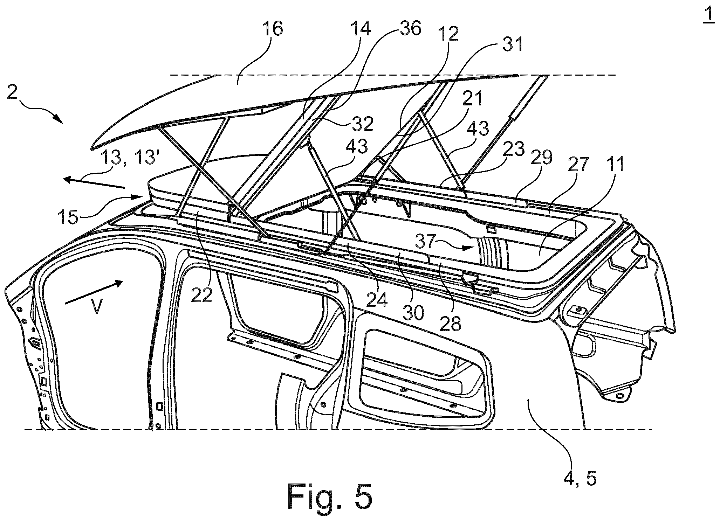

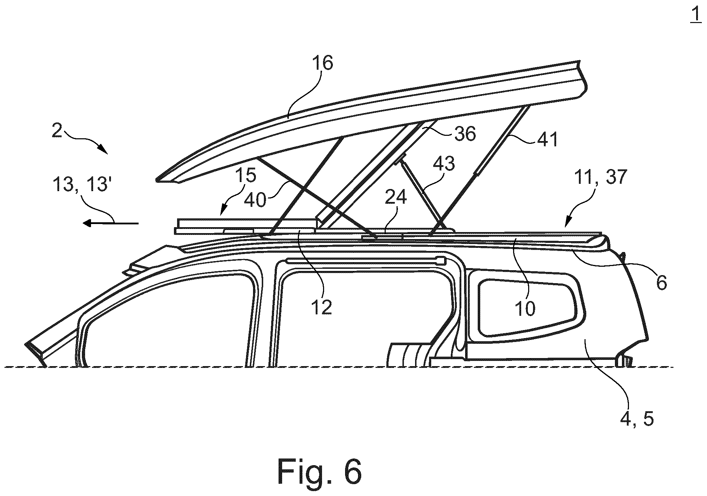

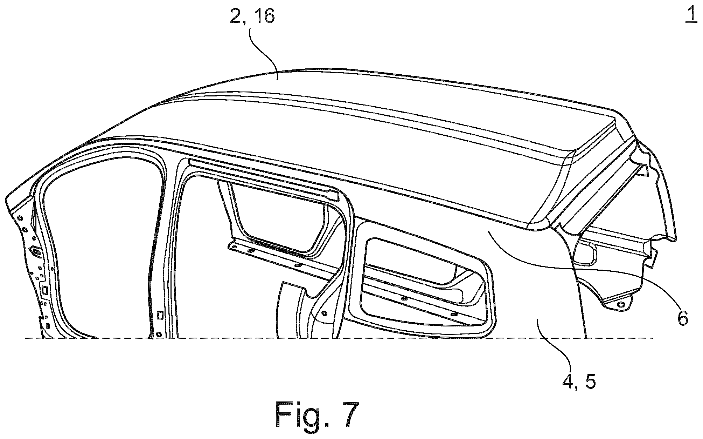

Fig. 5 zeigt das in Fig 4 gezeigte Freizeitfahrzeug 1, wobei die Bettkonstruktion 12 aus der auskragenden Endstellung 15 teilweise nach oben geklappt ist. Ferner zeigt Fig. 6 das in Fig. 5 gezeigte Freizeitfahrzeug 1 in einer auszugsweisen, schematischen Darstellung aus der mit V bezeichneten Blickrichtung. Außerdem zeigt Fig. 7 das Freizeitfahrzeug 1 entsprechend dem Ausführungsbeispiel, wobei das Aufstelldach 2 geschlossen ist.

Das Aufstelldach weist eine Dachschale 16 auf. Die Bettkonstruktion 12 ist bei geschlossener Dachschale 16 (Fig. 7) in einer Normalstellung 17 entsprechend der Darstellung in Fig. 3 an dem Rahmen 10 angeordnet. In der Normalstellung ist die Bettkonstruktion 12 nicht über den Rahmen 10 hinaus in Richtung der auskragenden Endstellung 15 geschoben. Dadurch wird das Schließen der Dachschale 16 ermöglicht.

Die Bettkonstruktion 12 ist als rahmenförmige Bettkonstruktion 12 ausgestaltet. Hierbei ist zwischen der Bettkonstruktion 12 und dem Rahmen 10 eine beidseitige Schienenführung 17 ausgebildet.

Die Bettkonstruktion 12 umfasst eine erste Längsstrebe 21 und eine zweite Längsstrebe 22. An der ersten Längsstrebe 21 ist eine erste Schiene 23 vorgesehen, die in diesem Ausführungsbeispiel als schmale, durchgehende Leiste ausgestaltet ist. An der zweiten Längsstrebe 22 eine zweite Schiene 24 vorgesehen, die in diesem Ausführungsbeispiel als schmale, durchgehende Leiste ausgestaltet ist.

Der Rahmen 10 umfasst eine erste Längsseite 27 und eine zweite Längsseite 28, die den Längsstreben 21, 22 des Rahmens 10 zugeordnet sind. Die erste Längsseite 27 weist eine erste Führungsaufnahme 29 auf. Die zweite Längsseite 28 weist eine zweite Führungsaufnahme 30 auf.

Die erste Schiene 23 greift in die erste Führungsaufnahme 29 ein. Die zweite Schiene greift 24 in die zweite Führungsaufnahme 30 ein. Die erste Schiene 23 und die zweite Schiene 24 verlaufen jeweils horizontal. Ferner erstreckt sich die erste Schiene 23 vertikal durch die erste Führungsaufnahme 29. Außerdem erstreckt sich die zweite Schiene 24 vertikal durch die zweite Führungsaufnahme 30.

Die Bettkonstruktion 12 ist in diesem Ausführungsbeispiel auf den Rahmen 10 aufgelegt, wenn die Bettkonstruktion 12 nicht abgeknickt ist. Dabei sind Hubstreben 31, 32 der Bettkonstruktion 12 horizontal ausgerichtet, wie es in Fig. 1, 3, 4 gezeigt ist.

Die Bettkonstruktion 12 weist die Knickstelle 35 auf. Wenn die Bettkonstruktion 12 an der Knickstelle 35 abgeknickt ist, dann ist ein Teil 36 der Bettkonstruktion 12 nach oben geschwenkt. Die Hubstreben 31, 32 sind dann an der Knickstelle 35 nach oben abgewinkelt, wie es in Fig. 2, 5 und 6 gezeigt ist.

Der nach oben geschwenkte Teil 36 der Bettkonstruktion 12 gibt einen Bereich 37 um die Aufstiegsöffnung 11 frei. Dadurch wird eine höhere Steh- oder Sitzhöhe im Innenraum 8 des Freizeitfahrzeugs 1 ermöglicht.

Zusätzlich ist der Teil 36 der Bettkonstruktion 12 auch dann oder zumindest dann nach oben schwenkbar, wenn die Bettkonstruktion 12 in der auskragenden Endstellung 15 angeordnet ist, wie es in Fig. 5 gezeigt ist. Hierdurch wird die Kopffreiheit weiter verbessert.

Die Dachschale 16 kann mittels geeigneter Dachgestänge 40, insbesondere Kreuzgestänge 40, am Rahmen 10 abgestützt sein. Ferner kann zumindest ein Betätigungselement 41, insbesondere eine Gasdruckfeder 41, vorgesehen sein, um das Öffnen des Aufstelldaches 2 zu erleichtern und dieses dann offen zu halten. Außerdem können Hubelemente 43, die als Gasdruckfedern ausgeführt sein können, vorgesehen sein, die zum Anheben des Teils 36 der Bettkonstruktion 13 dienen und diesen angehoben halten.

Die Erfindung ist nicht auf die beschriebenen Ausführungsformen beschränkt.

## Patentansprüche

1. Aufstelldach (2) für Freizeitfahrzeuge (1), insbesondere Wohnmobile und/oder Campervans und/oder auf Hochdachkombis basierenden Freizeitfahrzeugen, mit einem Rahmen (10) und zumindest einer Aufstiegsöffnung (11), die einen Aufstieg durch den Rahmen (10) ermöglicht,
**dadurch gekennzeichnet,**
**dass** eine Bettkonstruktion (12) vorgesehen ist, dass die Bettkonstruktion (12) entlang einer Längsrichtung (13) zumindest mittelbar an dem Rahmen (10) geführt ist, dass die die Bettkonstruktion (12) entlang der Längsrichtung (13) über den Rahmen (10) hinaus in eine auskragende Endstellung (15) verschiebbar ist und dass die Bettkonstruktion (12) und der Rahmen (10) so ausgestaltet sind, dass in der auskragenden Endstellung (15) die Aufstiegsöffnung (11) in dem Rahmen (10) neben der Bettkonstruktion (12) freigegeben ist.

2. Aufstelldach nach Anspruch 1,
**dadurch gekennzeichnet,**
**dass** eine Dachschale (16) vorgesehen ist und dass die Bettkonstruktion (12) bei geschlossener Dachschale (16) in einer Normalstellung (17) an dem Rahmen (10) angeordnet ist, in der die Bettkonstruktion (12) zumindest nicht wesentlich über den Rahmen (10) hinaus in Richtung der auskragenden Endstellung (15) geschoben ist.

3. Aufstelldach nach einem der vorhergehenden Ansprüche,
**dadurch gekennzeichnet,**
**dass** dass die Bettkonstruktion (12) als rahmenförmige Bettkonstruktion (12) ausgestaltet ist.

4. Aufstelldach nach einem der vorhergehenden Ansprüche,
**dadurch gekennzeichnet,**
**dass** zwischen der Bettkonstruktion (12) und dem Rahmen (10) eine Schienenführung (17) ausgebildet ist.

5. Aufstelldach nach Anspruch 4,
**dadurch gekennzeichnet,**
**dass** die Bettkonstruktion (12) eine erste Längsstrebe (21) und eine zweite Längsstrebe (22) aufweist, dass an der ersten Längsstrebe (21) eine erste Schiene (23) vorgesehen ist, dass an der zweiten Längsstrebe (22) eine zweite Schiene (24) vorgesehen ist, dass der Rahmen (10) eine erste Längsseite (27), die eine erste Führungsaufnahme (29) aufweist, und eine zweite Längsseite (28) aufweist, die eine zweite Führungsaufnahme (30) aufweist, und dass die Bettkonstruktion (12) in dem Rahmen (10) geführt ist, indem die erste Schiene (23) in die erste Führungsaufnahme (29) und die zweite Schiene (24) in die zweite Führungsaufnahme (30) eingreift.

6. Aufstelldach nach Anspruch 5,
**dadurch gekennzeichnet,**
**dass** die erste Schiene (23) horizontal verläuft und sich vertikal durch die erste Führungsaufnahme (29) erstreckt und dass die zweite Schiene (24) horizontal verläuft und sich vertikal durch die zweite Führungsaufnahme (30) erstreckt.

7. Aufstelldach nach einem der vorhergehenden Ansprüche,
**dadurch gekennzeichnet,**
**dass** die Bettkonstruktion (12) zumindest eine Knickstelle (35) aufweist, wobei eine erste Hubstrebe (31) der Bettkonstruktion (12) und eine zweite Hubstrebe (32) der Bettkonstruktion (12) an der Knickstelle (35) so abwinkelbar sind, dass ein Teil (36) der Bettkonstruktion (12) nach oben schwenkbar ist.

8. Aufstelldach nach Anspruch 7,
**dadurch gekennzeichnet,**
**dass** der nach oben geschwenkte Teil (36) der Bettkonstruktion (12) zumindest einen Bereich (37) um die Aufstiegsöffnung (11) frei gibt.

9. Aufstelldach nach Anspruch 7 oder 8,
**dadurch gekennzeichnet,**
**dass** der Teil (36) der Bettkonstruktion (12) zumindest dann nach oben schwenkbar ist, wenn die Bettkonstruktion (12) in der auskragenden Endstellung (15) angeordnet ist.

10. Freizeitfahrzeug (1), insbesondere Wohnmobil und/oder Campervan und/oder auf einem Hochdachkombi basierenden Freizeitfahrzeug, mit einem Aufstelldach (2) nach einem der Ansprüche 1 bis 9.
